# EUROPÄISCHE PATENTSCHRIFT

(11) **EP 2 439 506 B1**
(45) Veröffentlichungstag und Bekanntmachung des Hinweises auf die Patenterteilung: **28.08.2019**
(21) Anmeldenummer: 11182347.2
(22) Anmeldetag: 22.09.2011
(51) Int. Cl.: G01J 5/02, G01J 5/04

(54) **Temperaturmesssystem**
Temperature measuring system
Système de mesure de température

(30) Priorität: 07.10.2010 DE 102010042138
(43) Veröffentlichungstag der Anmeldung: 11.04.2012
(73) Patentinhaber: BSH Hausgeräte GmbH, 81739 München (DE)
(72) Erfinder: Stein, Thomas, 84416 Taufkirchen/Vils (DE); Vormann, Ingo, 83413 Fridolfing (DE)

(56) Entgegenhaltungen:
- EP-A2- 0 142 153
- DE-A1-102006 022 324
- DE-U1- 9 416 779
- US-A- 3 742 175

## Beschreibung

Die Erfindung bezieht sich auf ein Messsystem zur berührungslosen Temperaturmessung von Garbehältern, also insbesondere auf einem Kochfeld befindlichen Töpfen oder Pfannen.

Sensorvorrichtungen zur Temperaturmessung sind allgemein bekannt, wie aus DE 10 2006 022 324 A1 , bei denen ein IR-Sensor die Temperatur eines Topfes misst. Abhängig von der gemessenen Temperatur wird im Herd die Energiezufuhr geregelt. DE195 41 632 A1 offenbart ein Zusatzgerät zur Infrarottemperaturmessung und eine Elektronik zur Signalübertragung mittels einer Infrarotsende- und Empfangseinheit. Auch sind Lösungen bekannt, bei denen ein in die Glaskeramikplatte des Kochfelds versenkbarer Messkopf verwendet wird.

Nachteilig an den bekannten Lösungen sind zum einen die Positionierung und Ausrichtung der mobilen Messeinheit, ferner die feste Integration der Sensoreinheit im Kochfeld, sowie die Energieversorgung mittels Batterien in der Messeinheit. Aufgabe der vorliegenden Erfindung ist es ein ergonomisch verwendbares Messsystem mit hoher Genauigkeit bereitzustellen.

Diese Aufgabe wird durch die Merkmale des Anspruchs 1 gelöst. Bevorzugte Ausführungsformen sind Gegenstand der abhängigen Ansprüche. Es wird ein Temperaturmesssystem zur berührungslosen Temperaturmessung von einem auf einem Kochfeld befindlichen Garbehälter bereitgestellt, wobei das Temperaturmesssystem eine mobile Messeinheit mit einem Temperatursensor aufweist. Dabei umfasst das Temperaturmesssystem eine Positionierungseinheit, zur Positionierung der Messeinheit mittels Magnetkraft an zumindest einer definierten Position relativ zum Kochfeld. Ein herkömmlich bekannter Messkopf, der in die Glaskeramikplatte versenkbar ist, hat den Nachteil, dass er nur jeweils an der entsprechenden Kochzone zum Einsatz kommen kann: Eine mobile Messeinheit kann aber an unterschiedlichen Stellen des Kochfelds verwendet werden, sofern dort ein (stationärer) Magnet der Positionierungseinheit vorgesehen ist. Durch die bekannte Versenkbarkeit der Messeinheit entstehen Kanten, Spalten und Vertiefungen, die schlecht zu reinigen sind. Eine magnetische Positionierung kommt dagegen mit einer ebenen und glatten Oberfläche aus, die entsprechend einfach gereinigt werden kann. Ebenso ist die mobile Messeinheit bei Nichtgebrauch oder zu Servicezwecken einfach entnehmbar. Vorteilhaft ist auch, dass eine ausschließlich mit Magnetkraft - also kraftschlüssig - positionierte

Messeinheit sich bei einem Anstoßen mit Kochgeschirr leicht verschieben kann und so nicht beschädigt wird oder das Kochgeschirr beschädigt. Die genannte definierte Position der Messeinheit liegt bevorzugt auf dem Kochfeld, kann sich aber alternativ auch neben dem Kochfeld befinden.

Erfindungsgemäß umfasst die Positionierungseinheit eine Winkelausrichteinheit zur Ausrichtung der Messrichtung der mobilen Messeinheit, wobei insbesondere die Winkelausrichteinheit eine magnetische Winkelausrichteinheit ist. Hierdurch wird dem Anwender die Ausrichtung der Messeinheit zu jeweils einer Kochzone erleichtert und aufgrund der Selbstjustierung der Magnetkräfte wird die optimale Lage sicher eingehalten und so steigt die Qualität und Genauigkeit der Messung. Eine exakte Positionierung der Messeinheit kann auch - wie später im Detail erläutert wird - bei der Signalübertragung und Energieversorgung vorteilhaft sein.

Weiterführend umfasst die Positionierungseinheit eine Winkelausrichteinheit zur Ausrichtung der Messeinheit in zumindest zwei unterschiedlichen Ausrichtungen an der zumindest einen definierten Position, so dass durch die Messeinheit wahlweise die Gargerätetemperatur mehrerer Kochfelder gemessen werden kann. Dabei kann die eine unterhalb der Glaskeramikplatte an der jeweiligen Position befindliche Basiseinheit für mehrere Kochfelder verwendet werden.

Bevorzugt ist die Magnetkraft der Positionierungseinheit stärker als die Magnetkraft der Winkelausrichteinheit. Wenn der Anwender die Messeinheit drehen will, um sie einer anderen Kochzone zuzuordnen, wird sich so stets der Drehpunkt des Ausrichtens um die Achse des Positionierungsmagneten ergeben und dem Anwender das Gefühl einer geführten Drehbewegung um diese Achse geben.

Weiterführend ist die Messeinheit auf der Oberseite des Kochfelds an der zumindest einen definierten Position positionierbar und zur Unterstützung der Positionierung und/oder Ausrichtung ist kein mechanisches Hilfsmittel, wie Anschläge, Rastungen, Führungen oder dergleichen, vorgesehen. So kann die Messeinheit auf einer ebenen und/oder glatten und/oder entsprechend leicht zureinigenden Oberfläche verwendet werden.

Weiterführend weist die Positionierungseinheit zumindest einen Sensor zur Erkennung der Ausrichtung der mobilen Messeinheit und zur Erzeugung eines entsprechenden elektrischen Signals auf. Alternativ und/oder zusätzlich kann auch ein Sensor zur Erkennung des Vorhandenseins der Messeinheit an einer entsprechenden Stelle des Kochfelds verwendet werden. Da der Anwender somit nur die Messeinheit auf die Kochzone ausrichten muss und keine weiteren Knöpfe oder dergleichen drücken muss, wird eine hohe Ergonomie erreicht. Ferner ist so stets sichergestellt, dass die Kochzone, die von der Kochfeldsteuerung geregelt wird, auch wirklich der Kochzone entspricht, bei der die Temperatur gemessen wurde.

Vorzugsweise sind zur Positionierung und/oder Ausrichtung der Messeinheit Permanentmagnete vorgesehen und zumindest der oder die Permanentmagnete der mobilen Messeinheit weisen eine Curie-Temperatur von über 120°C auf. Permanentmagnete werden bevorzugt verwendet, da sie kostengünstig sind. Die Curietemperatur ist die Temperatur, bei der die Permanentmagnete ihre Magnetkraft verlieren. Diese muss entsprechend hoch sein, da Temperaturen bis zu der genannten Höhe in der Nähe der erwärmten Kochzonen auftreten kann.

Weiterführend weist das Temperaturmesssystem ein induktives Energieübertragungssystem zur Übertragung der Betriebsenergie der Messeinheit und Mittel zur induktiven Messsignalübertragung durch die Glaskeramikplatte des Kochfelds auf. Die Energieübertragung ist kostengünstig durch einfache Spulen oder auch in Form von auf den Platinen aufgedruckten Leiterbahnen realisierbar und funktioniert insbesondere nach dem Transponderprinzip. Die Signalübertragung wird durch eine Modulation des Magnetfelds durch die mobile Messeinheit erreicht. Auf diese Weise kann auf eine gesonderte Energieversorgung in der Messeinheit verzichtet werden und die Integration der Energie- und Datenübertragung verringert den technischen Aufwand und die Bauteilkosten.

Ein entsprechendes Gargerät umfasst eine Elektronik zur Ansteuerung von zumindest einer Kochzone des Kochfelds in Abhängigkeit von einer von dem Temperaturmesssystem bestimmten Temperatur. So wird ein Regelkreis zur Regelung der Temperatur erzeugt und ein altbekanntes Problem von Kochplatten, dass nur die Energiezufuhr gesteuert, nicht aber eine gewünschte Temperatur einstellbar ist, gelöst.

Weiterführend kann die Messeinheit auch mehrere Temperatursensoren zur Temperaturmessung in unterschiedlichen Richtungen aufweisen. So kann eine einzelne Messeinheit ohne durch den Anwender verstellt oder verdreht zu werden mehrere Kochzonen überwachen. Alternativ kann die mobile Messeinheit ein Basisteil zur Positionierung der Messeinheit relativ zum Kochfeld und ein Oberteil aufweisen, wobei das Oberteil einen Temperatursensor aufweist und ein Antrieb zur Rotation von dem Oberteil relativ zum Basisteil und somit zur Temperaturmessung des Temperatursensors in unterschiedlichen Richtungen vorgesehen ist. Da ein Antriebsmotor kostengünstig ist, können so automatisiert mehrere Kochzonen gemessen werden.

Im Folgenden wird die Erfindung mit Bezug auf die Zeichnungen anhand von bevorzugten Ausführungsformen beispielhaft beschrieben. Es zeigen:
- Fig. 1: die perspektivische Ansicht eines Gargeräts,
- Fig. 2 bis Fig.5: Draufsichten auf das Kochfeld des Gargeräts mit unterschiedlichen Positionen der Messeinheit,
- Fig. 6: eine perspektivische Ansicht der Messeinheit 50,
- Fig. 7: eine Unteransicht der Messeinheit 50,
- Fig. 8: eine Detailansicht der Zusammenwirkung von Messeinheit 50 und Basiseinheit 100,
- Fig.9: eine Unteransicht der Messeinheit ohne ihr Gehäuse und
- Fig.10: eine Prinzipskizze des Datenflusses.

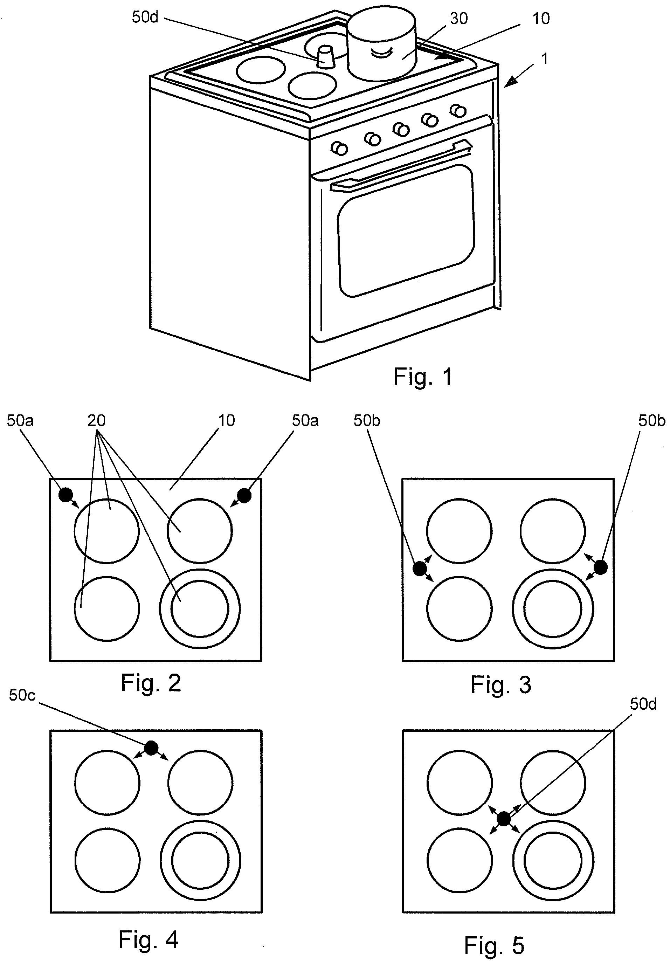

Fig. 1 zeigt ein Gargerät 1 mit einem an der Oberseite befindlichen Kochfeld 10 als Standgerät. Alternativ kann das Kochfeld in eine Arbeitsplatte (nicht dargestellt) integriert und somit ohne einen Ofen verwendet werden. Das Kochfeld ist als ein Glaskeramikfeld ausgeführt und umfasst vier Kochzonen 20. Fig. 1 zeigt einen Garbehälter 30, wie einen Kochtopf oder alternativ eine Pfanne auf einer der Kochzonen 20. Mittig im Kochfeld steht eine mobile Messeinheit 50d. Wie später noch im Detail beschrieben wird, wird mit der Messeinheit 50d die Außentemperatur der Wand des Garbehälters 30 gemessen und über Induktion, also gemäß dem Transponderprinzip, durch das Glaskeramikmaterial des Kochfelds 10 an eine darunter liegende Elektronik einer Basiseinheit 100 übertragen und von dort zu der Steuerung des Gargeräts 1 geleitet. Über die gemessene Temperatur kann die Steuerung die benötigte Hitzezufuhr zur entsprechenden Kochzone 20 bestimmen und so kann der Garbehälter 30 auf eine gewünschte Temperatur gebracht werden. Aufgrund der gemessenen Temperatur ergibt sich also ein geschlossener Regelkreis.

Die Temperaturmessung erfolgt berührungslos über einen Infrarottemperatursensor im Wellenlängebereich von 8 µm < λ < 14 µm. Derartige Sensoren, auch Pyrometer genannt, sind allgemein bekannt und messen die Infrarotstrahlung eines bspw. 10cm entfernten Objekts und geben als Messergebnis einen der Temperatur entsprechenden Strom.

Fig. 2 bis 5 zeigen unterschiedliche Verwendungen und Varianten der Messeinheit 50. Gemäß Fig. 2 sind an den beiden hinteren Ecken des Kochfelds 10 jeweils eine Messeinheit 50a angeordnet, wobei die Messrichtung in Richtung der jeweils benachbarten Kochzone 20 zeigt. Gemäß Fig. 3 sind Messeinheiten 50b an den Außenseiten des Kochfelds 10 zwischen zwei Kochzonen angeordnet. Abhängig von ihrer jeweiligen Ausrichtung kann die Messeinheit eine der beiden Kochzonen überwachen. Fig. 4 zeigt mit der Messeinheit 50c die Überwachung von den beiden hinten gelegenen Kochzonen. Fig. 5 steht für eine Variante, bei der eine Messeinheit zentral zwischen den vier Kochzonen angeordnet ist und abhängig von der Drehung Gargeräte auf den jeweiligen Kochzonen überwachen kann.

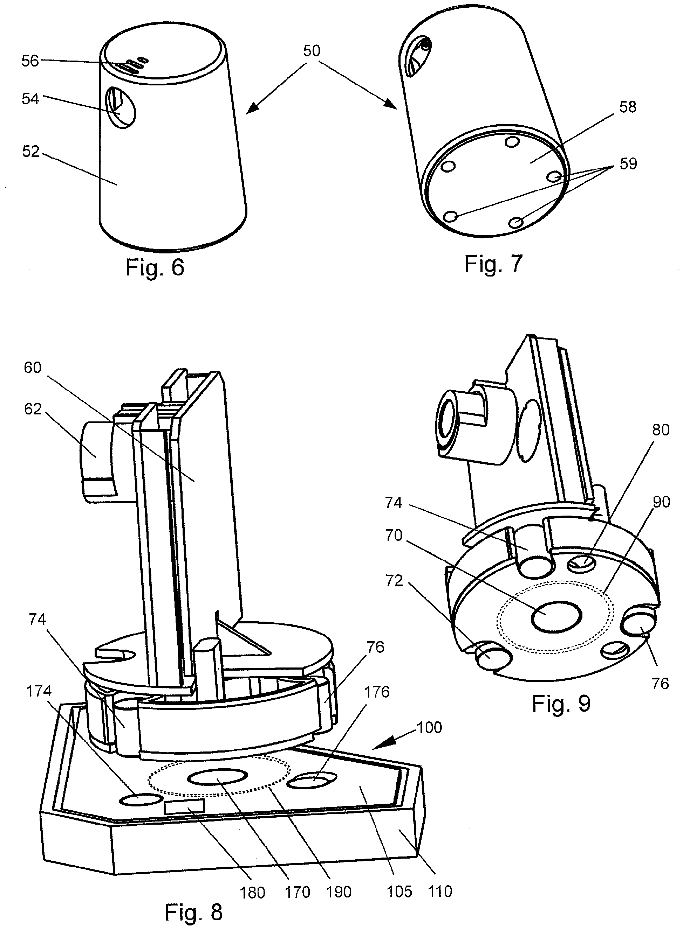

Gemäß Fig. 6 und Fig. 7 umfasst die Messeinheit 50 eine kegelstumpfförmige Kappe 52 mit einer Öffnung 54, durch welche die Optik des Temperatursensors 62 die Temperaturmessung vornehmen kann. Als Hinweis der korrekten winkelmäßigen Ausrichtung umfasst die Oberseite der Kappe eine der Öffnung 54 entsprechende Markierung 56. Die Unterseite der Kappe 52 wird durch ein Bodenteil 58 verschlossen, welches fünf Gleitnoppen also lokale gerundete Vorsprünge als Stand- und Kontaktfläche auf der Glaskeramik des Kochfelds 10 umfasst.

Fig. 8 zeigt die Messeinheit ohne die Kappe 52 und das Bodenteil 58. In einem Abstand von der Unterseite der Messeinheit, welcher der Dicke der Glaskeramik (abzüglich der Dicke des Bodenteils) entspricht, ist die Basiseinheit 100 dargestellt. Die Basiseinheit umfasst ein Gehäuse 110 als ein Kunststoffspritzgussteil, welches am Kochfeld befestigt ist und dient zur Lagerung der Platine 105 und der Magnete 170, 172 (nicht dargestellt), 174 und 176. An jeder Stelle des Kochfelds, an der die Messeinheit 50 platzierbar sein soll, wird jeweils eine Basiseinheit 100 verwendet. Alternativ kann die Basiseinheit auch von dem Kochfeld getrennt in die benachbarte Arbeitsplatte integriert sein.

Entsprechend zur Basiseinheit sind an der Messeinheit 50 Magnete 70, 72, 74 und 76 angeordnet (siehe Fig. 9). Um einen zentralen Positionsmagnet 70 gruppieren sich planetenförmig die Positionsmagnete 72, 74 und 76. Der Positionierungs- oder Hauptmagnet 70 weist mit seinem Nordpol nach unten. Der Positionsmagnet 170 der Basiseinheit 100 weist mit seinem Südpol nach oben. Da der Positionsmagnet 170 direkt unterhalb der Glaskeramik des Kochfelds 10 sitzt, wird er den Magneten 70 die Messeinheit anziehen sobald ein Anwender die Messeinheit grob in den entsprechenden Bereich platziert und so die Messeinheit an ihre Sollposition ziehen. Dies bewirkt die Ausrichtung der Position der Messeinheit, jedoch noch nicht der winkelmäßigen Orientierung. Hierzu werden die Richtungsmagnete 72, 74 und 76 der Messeinheit verwendet, die mit entsprechenden Positionsmagneten 172 (nicht gezeigt), 174 und 176 der Basiseinheit 100 korrespondieren. Die Polung der Richtungsmagnete ist jeweils verdreht zu der des Positionsmagnets der gleichen Baugruppe. Also zeigen die Südpole der Messeinheit in Richtung der Glaskeramik, werden dort von den Richtungsmagneten 172, 174 und 176 der Basiseinheit angezogen und so wird die Messeinheit in ihrer winkelgemäßen Orientierung ausgerichtet. Die genannten Polungen sämtlicher Magnete können alternativ auch getauscht sein.

Gemäß Fig. 9 sind die Richtungsmagnete 72, 74 und 76 um einen Winkel von 120° um den Hauptmagnet 70 versetzt. Dieser Winkel entspricht dem Winkel der unterschiedlichen Messrichtungen der Fig 3 und 4. Wenn der Anwender also die Messeinheit grob positioniert und ausrichtet, wird aufgrund der Magnetkraft eine exakte Orientierung automatisch erzielt.

Für die Regelung der Heizenergie zu der richtigen Kochzone muss die Elektronik automatisch die Lage und Orientierung der Messeinheit erkennen. Dies geschieht über einen Hallsensor (nicht dargestellt) der in einer Aufnahme 80 des Gehäuses der Messeinheit 50 angeordnet ist. Die Platine 105 der Basiseinheit weist eine metallische Fläche 180 auf. Der Hallsensor ist eingerichtet dieses Metall zu detektieren. Das Messsignal wird auf die stationäre Elektronik 120 übertragen und so kann die Elektronik die Orientierung erkennen. Zur Verbesserung der Messsicherheit können als eine Kodierung unterschiedlich große metallische Flächen verwendet werden und so eine exakte Ausrichtungserkennung durchgeführt werden. Alternativ kann der Hallsensor auch stationär auf der Platine 105 der Basiseinheit 100 vorgesehen sein.

Zur Energieversorgung der Messeinheit wird das Prinzip der Induktion verwendet. Hierfür sind auf der Platine 105 koaxial zu dem Positionsmagneten 170 Leiterbahnen aufgedruckt, die mit einem Wechselstrom angetrieben werden und als Induktionsspule 190 wirken. Sie korrespondieren mit einer entsprechenden Induktionsspule 90 der Messeinheit und hier wird aufgrund des erzeugten wechselnden Magnetfelds ein Strom induziert, der zum Betrieb des Temperatursensors verwendet wird. Die Messeinheit verfügt über keine gesonderte Batterie, Akku oder dergleichen. Die Induktionsspulen 90 und 190 werden auch zur Signalübertragung verwendet. Hierzu moduliert die Messeinheit 50 gemäß des Transponderprinzips das Magnetfeld und diese Veränderung wird von der Auswerteelektronik 120 der Basiseinheit erkannt. Über die Modulation wird das Messergebnis an die Basiseinheit 100 übergeben.

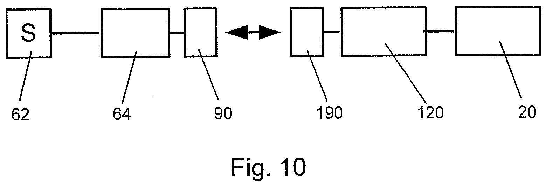

Der Informationsfluss ist prinzipartig in Fig. 10 dargestellt. Von dem Temperatursensor 62 wird ein Messstrom erzeugt, der der gemessenen Temperatur entspricht. Dieser Messstrom wird von der Elektronik 64 der Messeinheit verarbeitet und an die Induktionsspule 90 übermittelt. Das so veränderte Magnetfeld wird von der Induktionsspule 190 erkannt, von der Elektronik 120 der Basiseinheit aufbereitet und an die Steuerung 20 des Kochfelds geleitet. Auf diese Weise kann eine gewünschte Temperatur an der jeweiligen Kochzone geregelt werden. Falls kein Topf auf der Kochzone steht kann dies auch über das gemessene Signal erkannt werden.

### Bezugszeichen:

- 1.: Gargerät
- 10.: Kochfeld
- 20.: Kochzonen
- 30.: Garbehälter
- 50, 50a, 50b, 50c, 50d: (mobile) Messeinheit
- 52: Kappe
- 54: Öffnung
- 56: Markierung
- 58: Bodenteil
- 59: Gleitnoppen
- 60: Platine
- 62: Temperatursensor
- 64: Elektronik der Messeinheit
- 70: Positionsmagnet der Messeinheit
- 72, 74, 76: Richtungsmagnete der Messeinheit
- 80: Hallsensoraufnahme
- 90: Induktionsspule
- 100: Basiseinheit
- 105: Platine
- 110: Gehäuse
- 120: stationäre Elektronik
- 170: Positionsmagnet
- 172, 174, 176: Richtungsmagnete der Basiseinheit
- 180: metallische Fläche
- 190: Induktionsspule

## Patentansprüche

1. Temperaturmesssystem zur berührungslosen Temperaturmessung von einem auf einem Kochfeld (10) befindlichen Garbehälter (30), wobei das Temperaturmesssystem
- eine mobile Messeinheit (50, 50a, 50b, 50c, 50d) mit einem Temperatursensor (62),
- eine Basiseinheit (100) zur Platzierung am Kochfeld (10) oder getrennt davon in einer benachbarten Arbeitsplatte, und
- eine Positionierungseinheit umfasst,
wobei die Positionierungseinheit an der mobilen Messeinheit (50, 50a, 50b, 50c, 50d) und der Basiseinheit (100) jeweils einen zentralen Positionsmagnet (70, 170) und planetenförmig darum gruppierte Richtungsmagnete (72, 74, 76, 172, 174, 176) aufweist, welche zur Positionierung und Winkelausrichtung der mobilen Messeinheit (50, 50a, 50b, 50c, 50d) mittels Magnetkraft an einer durch die Basiseinheit definierten Position relativ zum Kochfeld ausgebildet sind.

2. Temperaturmesssystem gemäß Anspruch 1, **dadurch gekennzeichnet, dass** die Richtungsmagnete (72, 74, 76, 174, 176) zur Ausrichtung der Messeinheit (50) in zumindest zwei unterschiedliche und definierte Messrichtungen an der einen definierten Position verwendbar sind.

3. Temperaturmesssystem gemäß einem der vorangegangenen Ansprüche, wobei die Magnetkraft der Positionsmagnete (70, 170) stärker ist als die Magnetkraft der Richtungsmagnete (72, 74, 76, 172, 174, 176).

4. Temperaturmesssystem gemäß einem der vorangegangenen Ansprüche, **dadurch gekennzeichnet, dass** die Messeinheit (50) auf der Oberseite des Kochfelds (10) an der zumindest einen definierten Position positionierbar ist und zur Unterstützung der Positionierung und/oder Ausrichtung kein mechanisches Hilfsmittel, wie Anschläge, Rastungen, Führungen oder dergleichen, vorgesehen ist.

5. Temperaturmesssystem gemäß einem der vorangegangenen Ansprüche, **dadurch gekennzeichnet, dass** zur Positionierung und/oder Ausrichtung der Messeinheit Permanentmagnete (70, 72, 74, 76, 170, 174, 176) vorgesehen sind und dass zumindest der oder die Permanentmagnete (70, 72, 74, 76) der mobilen Messeinheit eine Curie-Temperatur von über 120°C aufweisen.

6. Temperaturmesssystem gemäß einem der vorangegangenen Ansprüche, **dadurch gekennzeichnet, dass** das Temperaturmesssystem ein induktives Energieübertragungssystem (90, 190) zur Übertragung der Betriebsenergie der Messeinheit (50) und Mittel (90, 190) zur induktiven Messsignalübertragung durch eine Glaskeramikplatte des Kochfelds (10) umfasst.

7. Gargerät (1) mit einem Temperaturmesssystem nach einem der Ansprüche 1 bis 6, und einer Elektronik (120) zur Ansteuerung von zumindest einer Kochzone (20) des Kochfelds (10) in Abhängigkeit von einer von dem Temperaturmesssystem bestimmten Temperatur.

## Claims

1. Temperature measuring system for the contactless measurement of the temperature of a cooking vessel (30) disposed on a hob (10), wherein the temperature measuring system
- comprises a mobile measuring unit (50, 50a, 50b, 50c, 50d) with a temperature sensor (62),
- a base unit (100) for positioning on the hob (10) or separately herefrom on an adjacent work surface, and
- a positioning unit,
wherein on the mobile measuring unit (50, 50a, 50b, 50c, 50d) and the base unit (100) the positioning unit has a central position magnet (70, 170) and direction magnets (72, 74, 76, 172, 174, 176) grouped therearound in the manner of a planet in each case, which are embodied for the positioning and angular alignment of the mobile measuring unit (50, 50a, 50b, 50c, 50d) by means of magnetic force at a position defined by the base unit relative to the hob.

2. Temperature measuring system according to claim 1, **characterised in that** the direction magnets (72, 74, 76, 174, 176) can be used to align the measuring unit (50) in at least two different and defined measuring directions at the one defined position.

3. Temperature measuring system according to one of the preceding claims, wherein the magnetic force of the position magnets (70, 170) is stronger than the magnetic force of the direction magnets (72, 74, 76, 172, 174, 176).

4. Temperature measuring system according to one of the preceding claims, **characterised in that** the measuring unit (50) can be positioned on the top side of the hob (10) at the at least one defined position and no mechanical aid, such as stops, detents, guides or suchlike is provided to assist with the positioning and/or alignment.

5. Temperature measuring system according to one of the preceding claims, **characterised in that** permanent magnets (70, 72, 74, 76, 170, 174, 176) are provided to position and/or align the measuring unit and that at least the permanent magnet/s (70, 72, 74, 76) of the mobile measuring unit have a Curie temperature of above 120°C.

6. Temperature measuring system according to one of the preceding claims, **characterised in that** the temperature measuring system comprises an inductive energy transmission system (90, 190) for transmitting the operating energy of the measuring unit (50) and means (90, 190) for the inductive signal transmission through a glass ceramic plate of the hob (10).

7. Cooking device (1) with a temperature measuring system according to one of claims 1 to 6, and an electronic device (120) for actuating at least one cooking zone (20) of the hob (10) as a function of a temperature determined by the temperature measuring system.

## Revendications

1. Système de mesure de température pour la mesure de température sans contact d'un récipient de cuisson (30) se trouvant sur un champ de cuisson (10), dans lequel le système de mesure de température
- comprend une unité de mesure mobile (50, 50a, 50b, 50c, 50d) avec un capteur de température (62),
- une unité de base (100) pour le placement sur le champ de cuisson (10) ou à l'écart de celui-ci sur un plan de travail voisin, et
- une unité de positionnement, dans lequel l'unité de positionnement présente sur l'unité de mesure mobile (50, 50a, 50b, 50c, 50d) et l'unité de base (100) respectivement un aimant de position central (70, 170) et des aimants d'orientation (72, 74, 76, 172, 174, 176) groupés en configuration planétaire autour de ceux-ci, lesquels sont exécutés en vue du positionnement et de l'orientation angulaire de l'unité de mesure mobile (50, 50a, 50b, 50c, 50d) par force magnétique selon une position par rapport au champ de cuisson définie par l'unité de base.

2. Système de mesure de température selon la revendication 1, **caractérisé en ce que** les aimants d'orientation (72, 74, 76, 174, 176) sont utilisables pour l'orientation de l'unité de mesure (50) dans au moins deux directions de mesure différentes et définies sur l'au moins une position définie.

3. Système de mesure de température selon l'une des revendications précédentes, dans lequel la force magnétique des aimants des aimants de position (70, 170) est supérieure à la force magnétique des aimants d'orientation (72, 74, 76, 172, 174, 176).

4. Système de mesure de température selon l'une des revendications précédentes, **caractérisé en ce que** l'unité de mesure (50) peut être positionnée sur le côté supérieur du champ de cuisson (10) dans l'au moins une position définie et **en ce qu'**aucun moyen auxiliaire mécanique comme des butées, des crans d'arrêt, des guides ou semblables n'est prévu pour le soutien du positionnement et/ou de l'orientation.

5. Système de mesure de température selon l'une des revendications précédentes, **caractérisé en ce que** des aimants permanents (70, 72, 74, 76, 170, 174, 176) sont prévus pour le positionnement et/ou l'orientation de l'unité de mesure et **en ce qu'**au moins les aimants permanents (70, 72, 74, 76) de l'unité de mesure mobile présentent une température de Curie supérieure à 120°C.

6. Système de mesure de température selon l'une des revendications précédentes, **caractérisé en ce que** le système de mesure de température comprend un système de transmission d'énergie inductif (90, 190) pour la transmission de l'énergie de fonctionnement de l'unité de mesure (50) et des moyens (90, 190) pour la transmission inductive de signaux de mesure par une plaque vitrocéramique du champ de cuisson (10).

7. Appareil de cuisson (1) avec un système de mesure de température selon l'une des revendications 1 à 6, et une électronique (120) pour la commande d'au moins une zone de cuisson (10) en fonction d'une température déterminée par le système de mesure de température.
